# EUROPEAN PATENT APPLICATION

(11) **EP 4 650 242 A1**
(43) Date of publication of application: **19.11.2025**
(21) Application number: 23916139.1
(22) Date of filing: 14.11.2023
(51) Int. Cl.: B60W 50/12, G06F 21/31

(54) **USER AUTHENTICATION METHOD AND USER AUTHENTICATION SYSTEM**

(30) Priority: 12.01.2023 JP 2023003293
(71) Applicant: Panasonic Intellectual Property Management Co., Ltd., Kadoma-shi, Osaka 571-0057 (JP)
(72) Inventor: AOSHIMA, Hatsuho, Kadoma-shi, Osaka 571-0057 (JP); HAGA, Tomoyuki, Kadoma-shi, Osaka 571-0057 (JP); UJIIE, Yoshihiro, Kadoma-shi, Osaka 571-0057 (JP); AKIMOTO, Shinya, Kadoma-shi, Osaka 571-0057 (JP); NAKAOKA, Hideaki, Kadoma-shi, Osaka 571-0057 (JP)
(74) Representative: Grünecker Patent- und Rechtsanwälte PartG mbB
(86) International application number: PCT/JP2023/040902
(87) International publication number: WO 2024/150521

(57) **Abstract**

A user authentication method is a method for authenticating a user who is riding in a vehicle (1). The user authentication method includes: authenticating (S40) the user at a first point in time; when the user performs (Yes in S20) an operation on a device provided to the vehicle (1) at a second point in time that is after the user is authenticated, determining (S30) whether a specific condition for the user is met; and skipping authentication of the user for the operation on the device when the specific condition is determined to be met (No in S30).

## Description

### [Technical Field]

The present disclosure relates to a user authentication method and a user authentication system.

### [Background Art]

In recent years, as vehicles have become more sophisticated, in-vehicle devices are connected to the vehicle network through Controller Area Network (CAN), Ethernet, or the like, so that communications can be performed with devices outside the vehicles. Authentication of users is being considered for such vehicles as part of security improvements. For example, Patent Literature (PTL) 1 discloses a technique used in a system that authenticates a vehicle occupant (user), for identifying the user and starting the engine or unlocks doors based on authority information for the identified user.

### [Citation List]

### [Patent Literature]

[PTL 1] Japanese Unexamined Patent Application Publication No. 2017-1615

### [Summary of Invention]

### [Technical Problem]

In recent years, "zero trust" has been proposed as a new security concept. The zero trust is the concept that the safety of communications should be checked regardless of whether the communications are within or outside a trusted network, and that the "sender," "source (location)," "suspicious behavior" and the like in the communications should be constantly checked. For example, when the "zero-trust" concept is applied to a vehicle, the user who is riding in the vehicle is authenticated each time the user uses a service (e.g., navigation function).

However, in an object such as a "vehicle" that requires real-time operations, there is a risk that driving safety may be reduced if the user performs a sudden authentication operation while driving or the like.

In view of the above, the present disclosure provides a user authentication method and a user authentication system that are capable of improving security performance while preventing a reduction in safety.

### [Solution to Problem]

A user authentication method according to an aspect of the present disclosure is a user authentication method for authenticating a user who is riding in a vehicle. The user authentication method includes: authenticating the user at a first point in time; determining whether a specific condition for the user is met when the user performs, at a second point in time, an operation on a device provided to the vehicle, the second point in time being after the user is authenticated; and skipping authentication of the user for the operation on the device, when the specific condition is determined to be met.

A user authentication system according to an aspect of the present disclosure is a user authentication system that authenticates a user who is riding in a vehicle. The user authentication system includes: an authenticator that authenticates the user at a first point in time; and an authentication necessity determiner that determines whether a specific condition for the user is met when the user performs, at a second point in time, an operation on a device provided to the vehicle, the second point in time being after the user is authenticated. The authentication necessity determiner causes the authenticator to skip authentication of the user for the operation on the device, when determining that the specific condition is met.

### [Advantageous Effects of Invention]

According to an aspect of the present disclosure, it is possible to realize a user authentication method and the like capable of improving security performance while preventing a reduction in safety.

### [Brief Description of Drawings]

[FIG. 1]

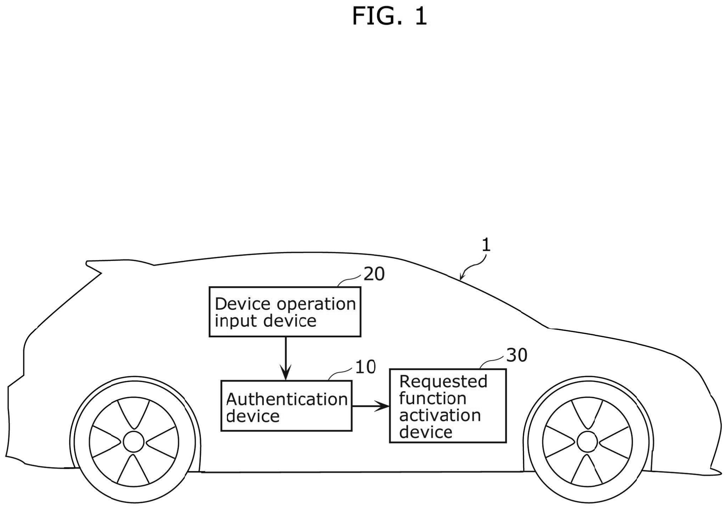

   FIG. 1 illustrates a schematic configuration of a vehicle according to an embodiment.
[FIG. 2]

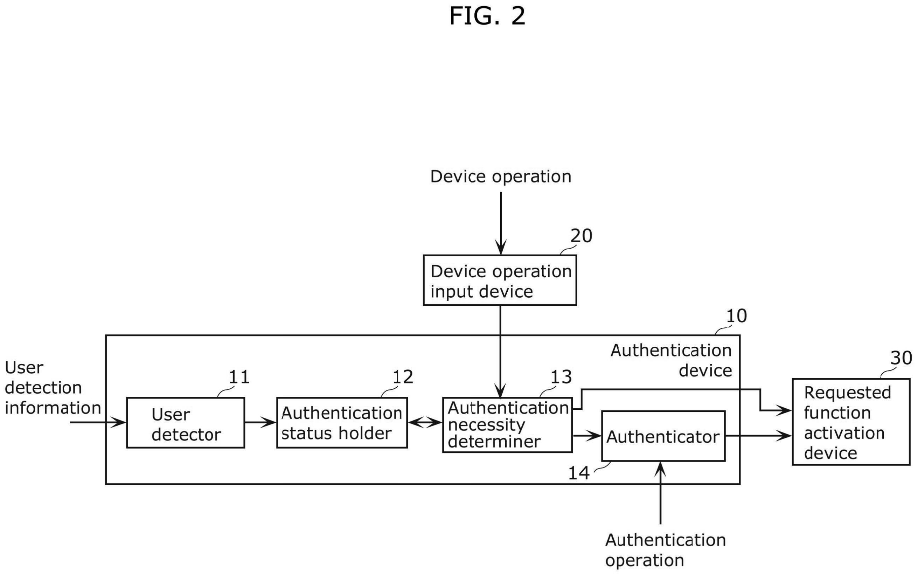

   FIG. 2 illustrates a functional configuration of an authentication device according to the embodiment.
[FIG. 3]

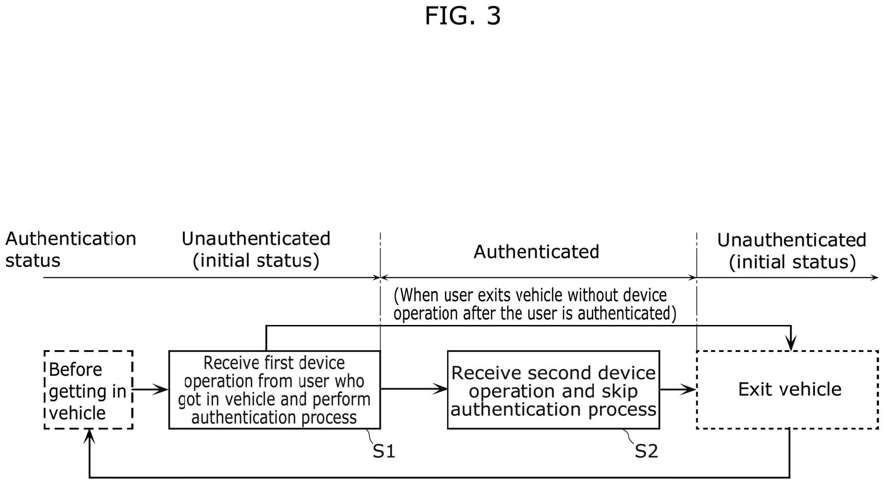

   FIG. 3 illustrates an outline of an authentication operation performed in the vehicle according to the embodiment.
[FIG. 4]

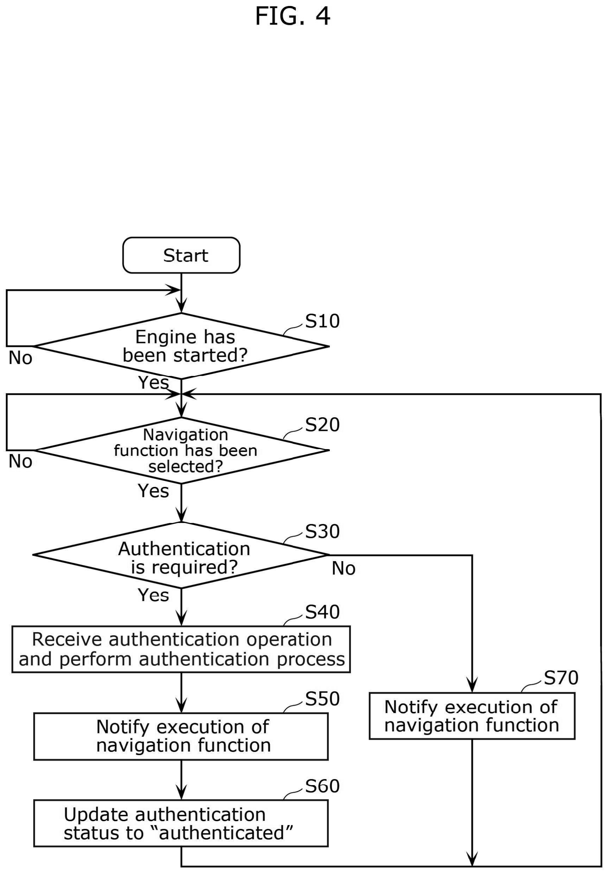

   FIG. 4 is a flowchart of the authentication operation performed by the authentication device according to the embodiment.
[FIG. 5]

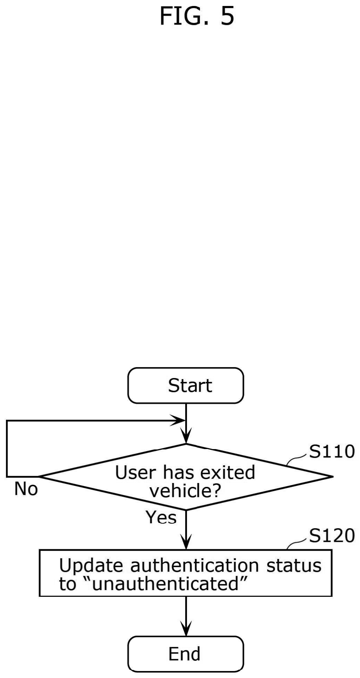

   FIG. 5 is a flowchart of an operation of updating an authentication status held by an authentication status holder according to the embodiment.
[FIG. 6]

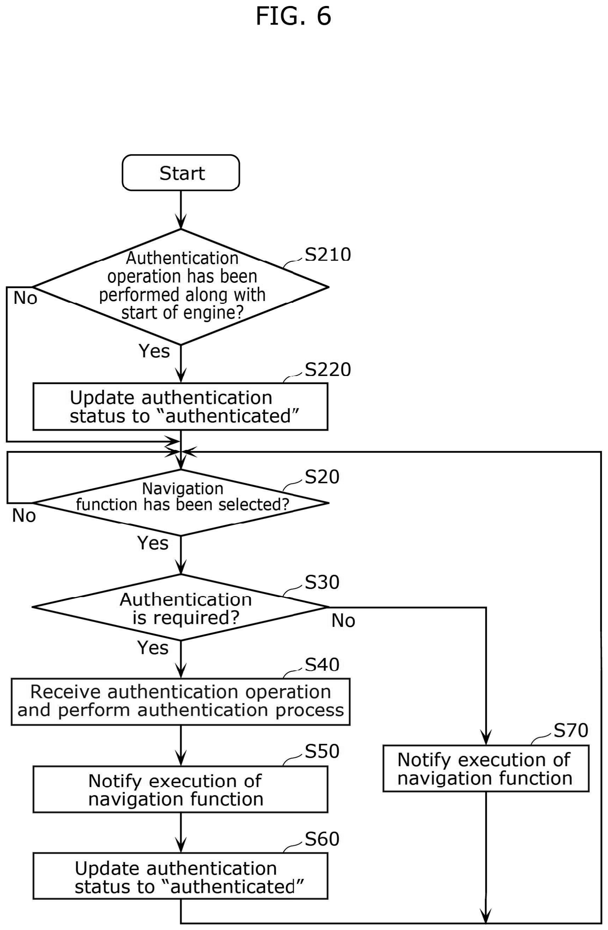

   FIG. 6 is a flowchart of an authentication operation performed by an authentication device according to a variation of the embodiment.

### [Description of Embodiments]

A user authentication method according to a first aspect of the present disclosure is a user authentication method for authenticating a user who is riding in a vehicle. The user authentication method includes: authenticating the user at a first point in time; determining whether a specific condition for the user is met when the user performs, at a second point in time, an operation on a device provided to the vehicle, the second point in time being after the user is authenticated; and skipping authentication of the user for the operation on the device, when the specific condition is determined to be met.

With this, since the user who is riding in the vehicle is authenticated at the first point in time, the security performance in the vehicle can be improved compared to the case where the user is not authenticated. In addition, when a specific condition is met at the second point in time, user authentication is skipped, thereby reducing the number of times a user must perform authentication operations in a vehicle that requires real-time operations. Therefore, according to the user authentication method, security performance can be improved while preventing the reduction in safety.

Moreover, for example, a user authentication method according to a second aspect of the present disclosure is the user authentication method according to the first aspect and further includes: updating an authentication status of the user to information indicating an authenticated status when the user is authenticated at the first point in time, and in the determining, whether the specific condition is met is determined based on the authentication status at the second point in time.

With this, the authentication status of the user at the second point in time is used in determining whether to skip authentication. Therefore, for example, it is possible to prevent authentication from being performed more than necessary and from being skipped when authentication is necessary. Therefore, according to the user authentication method, security performance can be improved more reliably while preventing the reduction in safety.

Moreover, for example, a user authentication method according to a third aspect of the present disclosure is a user authentication method according to the second aspect, in which, in the determining, the specific condition is determined to be met when the authentication status indicates the authenticated status, and the specific condition is determined not to be met when the authentication status indicates an unauthenticated status.

With this, it is possible to prevent the user who has been authenticated once from being reauthenticated. Therefore, it is possible to efficiently prevent a reduction in safety.

Moreover, for example, a user authentication method according to a fourth aspect of the present disclosure is the user authentication method according to the second aspect or the third aspect, and further includes: updating the authentication status to information indicating an unauthenticated status, when the user is detected, at a third point in time, to have exited the vehicle, the third point in time being after the first point in time.

This effectively improves security performance because authentication is not skipped at the second point in time when there is a possibility that the user has been changed.

Moreover, for example, a user authentication method according to a fifth aspect of the present disclosure is the user authentication method according to the fourth aspect and includes: determining that the user has not exited the vehicle when at least one of conditions is met throughout a period of time from the first point in time to the third point in time, the conditions including (i) that a load applied to a seat of the vehicle is continuously being detected, (ii) that use of a seat belt of the vehicle is continuously being detected, (iii) that the user is being continuously captured by an imaging device in the vehicle, (iv) that a vehicle speed of the vehicle is continuously greater than zero, and (v) that a window or a door of the vehicle is continuously closed.

This makes it easy to determine whether the user is the same person, based on whether at least one of the conditions is met.

Moreover, for example, a user authentication method according to a sixth aspect of the present disclosure is the user authentication method according to any one of the first aspect to the fifth aspect, in which the specific condition includes a condition that the user at the first point in time and the user at the second point in time are a same person.

With this, it is possible to prevent the same person from being reauthenticated. Therefore, it is possible to efficiently prevent a reduction in safety.

Moreover, for example, a user authentication method according to a seventh aspect of the present disclosure is the user authentication method according to any one of the first aspect to the sixth aspect, in which the first point in time is a point in time at which the user performs the operation on the device.

This allows the user to be authenticated when necessary.

Moreover, for example, a user authentication method according to an eighth aspect of the present disclosure is the user authentication method according to any one of the first aspect to the sixth aspect, in which the first point in time is a point in time at which the user starts an engine of the vehicle.

This allows the user to be authenticated in a state in which the vehicle is in a safer condition, thus further preventing a reduction in safety.

Moreover, for example, a user authentication method according to a ninth aspect of the present disclosure is the user authentication method according to any one of the first aspect to the eighth aspect and includes: requesting authentication of the user for the operation on the device, when the specific condition is determined not to be met.

This effectively improves security performance because the user is authenticated when a specific condition is not met.

Moreover, for example, a user authentication system according to a tenth aspect of the present disclosure is a user authentication system that authenticates a user who is riding in a vehicle. The user authentication system includes: an authenticator that authenticates the user at a first point in time; and an authentication necessity determiner that determines whether a specific condition for the user is met when the user performs, at a second point in time, an operation on a device provided to the vehicle, the second point in time being after the user is authenticated. The authentication necessity determiner causes the authenticator to skip authentication of the user for the operation on the device, when determining that the specific condition is met.

This provides the same advantageous effects as the user authentication method described above.

General and specific aspects disclosed above may be implemented using a system, a method, an integrated circuit, a computer program, or a non-transitory computer-readable recording medium such as a CD-ROM, or any combination of systems, methods, integrated circuits, computer programs, or computer-readable recording media. The program may be pre-stored on a recording medium or supplied to the recording medium via a wide-area communication network, including the Internet.

Hereinafter, an embodiment will be specifically described with reference to the drawings.

The embodiment described below shows a general or specific example. Numerical values, structural elements, the arrangement and connection of the structural elements, steps, the order of the steps, and the like shown in the following embodiment are examples, and are not intended to limit the present disclosure. Among the structural elements in the following embodiment, structural elements which are not recited in the independent claims are described as optional structural elements.

The drawings are schematic views and are not exactly illustrated. Hence, for example, scales and the like are not necessarily the same in the drawings. In the drawings, substantially the same configurations are identified with the same reference signs, and repeated descriptions are omitted or simplified.

In the present description, numerical values and numerical ranges are expressions which not only indicate exact meanings but also indicate substantially equivalent ranges such as a range including a several percent (or approximately 10%) difference.

### [Embodiment]

Hereinafter, a user authentication system according to the present embodiment will be described with reference to FIG. 1 to FIG. 5.

### [1. Configuration of User Authentication System]

First, a configuration of a user authentication system according to the present embodiment will be described with reference to FIG. 1 and FIG. 2. FIG. 1 illustrates a schematic configuration of vehicle 1 according to the present embodiment.

As illustrated in FIG. 1, vehicle 1 includes authentication device 10, device operation input device 20, and requested function activation device 30. A user authentication system that authenticates a user who is riding in vehicle 1 includes authentication device 10, device operation input device 20, and requested function activation device 30. The user authentication system may include at least authentication device 10.

Although not illustrated, in addition to the configuration illustrated in FIG. 1, vehicle 1 includes various sensors (including an imaging device) that detect seating of the user, locking of the doors, vehicle speed, etc., and various systems to realize the functions of vehicle 1 (services to the user), such as a navigation system and an automated driving system.

Vehicle 1 is an example of a mobile object in which the user rides, such as an automobile, bus, or train. In the present embodiment, vehicle 1 is an automobile, more specifically, a self-driving vehicle that can be driven automatically. Vehicle 1 may be a fully automated self-driving vehicle or a vehicle that can be switched between automated driving and manual driving.

A user is a person who rides in vehicle 1 (the user of vehicle 1), and is, for example, a driver. The user has previously made contracts for services related to vehicle 1, and is able to receive the contracted services (use the functions of vehicle 1), for example, while the user is driving vehicle 1. In the following description, the user is also referred to as the user of vehicle 1.

Authentication device 10 is an information processing device that authenticates the user who is riding in vehicle 1 (user authentication). In the present embodiment, authentication device 10 authenticates the user each time the user operates a device on device operation input device 20. In the present embodiment, authentication of the user is triggered by the user operating a device on device operation input device 20. However, the present disclosure is not limited to such an example.

The user authentication method is not particularly limited. The method may be, for example, biometric authentication, such as face authentication, fingerprint authentication, voiceprint authentication, or iris authentication, authentication that receives an input of identification information that is capable of identifying the user, such as password authentication, or a combination thereof. These authentication methods, if performed while the user is driving, may distract the user's attention to driving.

Authentication device 10 authenticates the user in vehicle 1 based on the "zero-trust" concept described in "Problem to be solved by the invention", and also authenticates the user taking into account driving safety and the like. Specifically, each time a user is changed (e.g., the driver is changed), authentication device 10 authenticates the user, but skips authentication (reauthentication) while a specific condition for the user is met. Authentication device 10, for example, does not perform reauthentication when the time for reauthentication comes while the specific condition for the user is met. It can be said that authentication device 10 prohibits reauthentication while a specific condition for the user is met.

The term "reauthentication" refers to requesting a user who has been authenticated once to perform authentication again. Moreover, the term "skipping" refers to not performing user authentication for some of the multiple user authentications (reauthentications) that would be performed in the "zero-trust" concept. As will be described in details below, the specific condition is, for example, that the user remains the same person. In other words, reauthentication is skipped while the user remains the same person.

In this way, authentication device 10 does not require the user to go through the reauthentication procedure when the user performs a device operation while the user remains the same. When the user is no longer the same, authentication device 10 requires the user after the change made at the time of device operation to perform the authentication procedure.

A detailed configuration of authentication device 10 will be further described here with reference to FIG. 2. FIG. 2 illustrates a functional configuration of authentication device 10 according to the present embodiment. FIG. 2 also illustrates device operation input device 20 and requested function activation device 30.

As illustrated in FIG. 2, authentication device 10 includes user detector 11, authentication status holder 12, authentication necessity determiner 13, and authenticator 14. Authentication device 10 includes, for example, a central processing unit (CPU) and memory. Each function of authentication device 10 is realized by the CPU executing the program stored in the memory.

User detector 11 obtains user detection information for determining whether a specific condition is met, and updates the authentication status of the user held by authentication status holder 12, based on the obtained user detection information. User detector 11 determines, for example, based on the obtained user detection information, whether the same user is riding in (e.g., driving) vehicle 1. User detector 11 initializes (resets) the authentication status of the user held by authentication status holder 12 when the identity of the user is lost. For example, user detector 11 updates the authentication status of the user held by authentication status holder 12 to "unauthenticated" to be described below when the identity of the user is lost.

The user detection information includes, for example, at least one of pressure data from a seating sensor, opening and closing data from door or window opening and closing sensor, speed data from a speed sensor, seat belt use data from a seat belt sensor, or image data of an interior of vehicle 1 captured by an imaging device. User detector 11 obtains the user detection information from various sensors on a regular or continuous basis.

The case in which the identity of the user is lost is, for example, when the load applied to the seat is interrupted, for example, in a case of the pressure data from the seating sensor.

Authentication status holder 12 is a storage device that holds the authentication status of the user. The authentication status includes an "authenticated" status indicating that the user currently riding in vehicle 1 has been authenticated, and an "unauthenticated" status indicating that the user currently riding in vehicle 1 has not been authenticated. The "authenticated" status is an example of information indicating an authenticated status, and the "unauthenticated" status is an example of information indicating an unauthenticated status. The authentication status is updated by user detector 11 and authenticator 14. The initial status of the authentication status is the "unauthenticated" status. Authentication status holder 12 is realized by, for example, but not limited to, a semiconductor memory.

When a user performs a device operation on device operation input device 20, authentication necessity determiner 13 determines whether authentication is required for the device operation according to the authentication status stored by authentication status holder 12 at the point of time. Specifically, when authentication status at the point of time when the device operation is performed is "authenticated," authentication necessity determiner 13 determines that the authentication (re-authentication) for the device operation is not required. When the authentication status is "unauthenticated," authentication necessity determiner 13 determines that authentication for the device operation is required. Authentication necessity determiner 13, for example, determines that the same user is using the service as long as the user is seated, so that some authentication procedures (e.g., authentication procedures for the device operation) are performed only once.

Authenticator 14 obtains an authentication operation from the user, and authenticates the user by uniquely identifying the user based on the obtained authentication operation. Authenticator 14 identifies whether the user riding in vehicle 1 is a pre-registered user. Authenticator 14 authenticates the user when authentication necessity determiner 13 determines that authentication is required. In other words, authenticator 14 does not authenticate the user when authentication necessity determiner 13 determines that authentication is not required. In this way, authenticator 14 does not always authenticate the user every time a device is operated by the user.

Authenticator 14 authenticates the user by at least one authentication method, such as face authentication, fingerprint authentication, voiceprint authentication, iris authentication, or password authentication. Authenticator 14 may include a sensor for performing the at least one authentication method, or may be in a state in which communication can be performed with the sensor.

Authenticator 14 updates the authentication status in authentication status holder 12 based on the result of authentication. Specifically, when the authentication is successful, authenticator 14 updates the authentication status of the user held by authentication status holder 12 to "authenticated".

Authentication information indicating a pre-registered user may be stored by vehicle 1 or by a server that can communicate with vehicle 1. Moreover, the authentication information may be associated with information that indicates, for each user, the services for which the user has made contracts.

Referring back to FIG. 1, device operation input device 20 receives, from the user, an input of an operation (device operation) for receiving the provision of services for which the user has made contracts. Examples of the device operation include an operation for executing the navigation function, automated driving function, and the like included in vehicle 1.

The navigation function is a function that is executable in vehicle 1 when the user has made a contract for receiving navigation services, and is a function that causes the navigation system in vehicle 1 to execute navigation.

The automated driving function is a function that is executable in vehicle 1 when the user has made a contract for receiving automated driving services, and is a function that causes the automated driving system in vehicle 1 to execute automated driving.

By the user making contracts with an automobile manufacturer or a service provider, various functions such as navigation function and automated driving function become available in vehicle 1. The functions that become available in vehicle 1 are not limited to such an example, and may be, for example, a function that plays distributed music, or other functions executable in vehicle 1.

Device operation input device 20 may be realized by a device such as a push button or a touch panel that receives a device operation by the user touching the device, by a device such as a microphone that receives a device operation by collecting the voice of the user, or by any other devices capable of receiving a device operation from the user. Device operation input device 20 is provided for each of the devices provided to vehicle 1, but may also be provided as a dedicated device that collectively receives operations performed on a plurality of devices.

Requested function activation device 30 is a control device that performs control to execute the function (e.g., navigation function) selected by the user authenticated by authentication device 10. Requested function activation device 30 controls the navigation system and causes navigation to be executed while vehicle 1 is driving, for example, when a use of the navigation function is input by an authenticated user via device operation input device 20. Requested function activation device 30 controls the automated driving system to cause vehicle 1 to execute automated driving, when, for example, a use of the automated driving function is input by an authenticated user via device operation input device 20.

When authentication device 10 fails an authentication, requested function activation device 30 does not perform control for executing the function input via device operation input device 20. It can be said that, when authentication device 10 fails the authentication, requested function activation device 30 prohibits the execution of the function of vehicle 1.

### [2. Operation of User Authentication System]

Next, an operation of the user authentication system configured as described above will be described with reference to FIG. 3 to FIG. 5. First, an outline of an authentication operation performed in vehicle 1 will be described with reference to FIG. 3. FIG. 3 illustrates an outline of an authentication operation performed in vehicle 1 according to the present embodiment. In FIG. 3, the state of the vehicle and the actions of the user are indicated by the dashed frames.

The state "before getting in vehicle" illustrated in FIG. 3 indicates a state that vehicle 1 is parked in a parking lot or the like and no one is riding in vehicle 1. At this stage, the engine of vehicle 1 is off. Before the user gets in vehicle 1, the authentication status held in authentication status holder 12 is "unauthenticated" (initial status).

When the user rides in vehicle 1, authentication device 10 receives a first device operation from the user, and executes an authentication process (S1). When the authentication is successful, the authentication status held in authentication status holder 12 is updated from "unauthenticated" (initial status) to "authenticated". When the first device operation is for using the navigation function, successful authentication initiates navigation to the destination.

Next, when authentication device 10 receives a second device operation while the user remains the same person, authentication device 10 skips the authentication process for the second device operation (S2). The second device operation here is, for example, an operation for changing the destination during driving in the navigation started in step S1 . At the point of time in step S2, the authentication status held in authentication status holder 12 is "authenticated". Hence, it is determined that authentication process for the second device operation is not required. The second device operation initiates the navigation to the changed destination.

Although the example in which the device operations in steps S1 and S2 are operations performed on the same device (in this case, the navigation system), the device operations may be operations performed on different devices. For example, step S1 may be an operation performed on a navigation system, and step S2 may be an operation performed on an automated driving system. The authentication information is associated with information indicating the services for which the user has made contracts. This makes it possible to skip the authentication process for the second device operation, even when the operations are performed on different devices in steps S1 and S2.

Next, when authentication device 10 detects that the user has exited vehicle 1, authentication device 10 updates the authentication status held by authentication status holder 12 to "unauthenticated" (initial status). Authentication device 10 updates the authentication status held in authentication status holder 12 to "unauthenticated" regardless of the ON state and OFF state of the engine. With this, the authentication status returns to the initial status "unauthenticated". In other words, the authentication status is initialized.

When the user exits vehicle 1 without performing the authentication operation after step S1, step S2 is not performed.

Next, an operation of authentication device 10 will be described with reference to FIG. 4 and FIG. 5. FIG. 4 is a flowchart of an authentication operation (user authentication method) performed by authentication device 10 according to the present embodiment. FIG. 4 illustrates an example in which the user performs an operation for executing the navigation function (an operation performed on the navigation system) as a device operation. The operation illustrated in FIG. 4 is an example of a user authentication method performed by authentication device 10 that authenticates the user riding in vehicle 1.

As illustrated in FIG. 4, authentication device 10 determines whether the user has got in vehicle 1 and started the engine (S10). When authentication device 10 determines that the engine has started (Yes in S10), authentication device 10 waits until a device operation is performed. When authentication device 10 determines that the engine has not started (No in S10), processing returns to step S10 and is continued. At this point of time, the authentication status held by authentication status holder 12 is "unauthenticated" (initial status).

Next, authentication necessity determiner 13 determines whether the navigation function has been selected, as an example of determining whether a device operation has been received (S20). Authentication necessity determiner 13 performs the determination in step S20 based on whether the device operation performed on device operation input device 20 is an operation for using the navigation function. When authentication necessity determiner 13 determines that the navigation function has been selected (Yes in S20), authentication necessity determiner 13 determines whether user authentication is required for the device operation (S30). Authentication necessity determiner 13 performs the determination in step S30 based on the authentication status held by authentication status holder 12. When authentication necessity determiner 13 does not determine that the navigation function has been selected (No in S20), processing returns to step S20 and is continued.

Authentication necessity determiner 13 determines that user authentication is required when the authentication status held by authentication status holder 12 is "unauthenticated" (Yes in S30). Authentication necessity determiner 13 determines that user authentication is not required when the authentication status held by authentication status holder 12 is "authenticated" (No in S30). Since the authentication status held by authentication status holder 12 is "unauthenticated" which is the initial status, Yes is determined in step S30.

For example, the point in time when the determination in step S30 is made for the first time after the start of the engine is an example of a first point in time. The first point in time may be the point in time when the user performs an operation on a device provided to vehicle 1 (e.g., the first time the user operates the device), and for example, may be the point in time when the navigation function is selected for the first time after the start of the engine.

The determination in step S30 corresponds to determining whether a specific condition for the user is met. A determination of Yes in step S30 is an example of a determination that a specific condition is not met. A determination of No in step S30 is an example of a determination that a specific condition is met.

Next, when authentication necessity determiner 13 determines that user authentication is required (Yes in S30), authentication necessity determiner 13 notifies authenticator 14 that authentication is required. Authenticator 14 then receives an authentication operation from the user and performs an authentication process (S40). In other words, when authentication necessity determiner 13 determines Yes in step S30, authenticator 14 requires the user to perform authentication for the operation of the device. The process in step S40 here corresponds to authenticating the user riding in vehicle 1 at the first point in time.

Next, when the authentication is successful, authentication necessity determiner 13 notifies requested function activation device 30 of the execution of the navigation function (S50). This activates the navigation function corresponding to the device operation received from the user in step S20, so that the navigation function becomes available.

Next, authenticator 14 updates the authentication status held by authentication status holder 12 to "authenticated" (S60). In this way, when the user is authenticated at the first point in time, authenticator 14 updates the authentication status of the user from "unauthenticated" to "authenticated". Authentication status holder 12 holds the "authenticated" status until the next update of the authentication status.

When authentication necessity determiner 13 determines that the navigation function has been newly selected (Yes in S20), authentication necessity determiner 13 determines whether user authentication for the device operation is required (S30). The authentication status held by authentication status holder 12 is "authenticated" in the case where the user has not exited vehicle 1 at or after the first point in time. Therefore, here, No is determined in step S30. In step S30, based on the user detection information, it is further determined whether the user who was determined to be "authenticated" in step S60 and the current user are the same person.

When authentication necessity determiner 13 determines that user authentication is not required (No in S30), authentication necessity determiner 13 notifies requested function activation device 30 of the execution of the navigation function (S70). This allows the navigation function corresponding to the device operation received in step S20 again to be continued without any authentication operation by the user. In other words, when the user remains the same, the navigation function for which the device operation was received in step S20 again is continued without reauthentication. In this way, when No is determined in step S30, user authentication (reauthentication) for the device operation is skipped.

For example, the point in time at which the determination in step S30 is made for the second or subsequent time after the start of the engine is an example of a second point in time. The second point in time may be, for example, a point in time when the navigation function is selected for the second or subsequent time after the start of the engine. Moreover, for example, the second determination in step S30 is performed when a device provided to vehicle 1 is operated at the second point in time after the user is authenticated.

The specific condition here is that the user at the first point in time and the user at the second point in time are the same person (the identity of the user is not lost). Examples of the condition include that (i) a load is continuously being applied to a seat (e.g., seat surface) throughout a period of time from the first point in time to the second point in time, (ii) doors or windows are closed throughout the period of time, (iii) the vehicle speed is continuously not zero throughout the period of time, (iv) the seat belt is continuously being used throughout the period of time, and (v) the user is continuously being captured in the image data throughout the period of time. However, the present disclosure is not limited to those examples. For example, the user is considered to remain the same during the periods of time in which a load is continuously being applied to the seat, doors or windows are continuously closed, the vehicle speed is continuously not zero, the seat belt is continuously being used, and the user is continuously being captured in the image data. Since a specific condition is met in such periods of time, authentication device 10 considers such periods of time to be periods of time during which reauthentication is not required. In other words, authentication device 10 skips reauthentication during the period of time in which the user (e.g., driver) remain the same. The specific condition may be a combination of two or more conditions (e.g., on a time-series basis). For example, the user may be considered to remain the same when the seat belt is continuously being used or a load is continuously being applied to the seat even if doors or windows are open.

The case in which the identity of the user is lost, for example, is a case in which a load applied to the seat is interrupted for a predetermined period of time or longer between the first point in time and the second point in time, for example, in a case of the pressure data from the seating sensor.

In this way, reauthentication is not performed while the identity of the user is not lost, thus saving the effort of the user related to reauthentication. Moreover, in the situation in which the user is operating vehicle 1 (e.g., the user is driving), it is expected to reduce the risk of accidents caused due to the attention of the user being distracted by the authentication operation for reauthentication.

An operation of updating the authentication status held by authentication status holder 12 will be described next with reference to FIG. 5. FIG. 5 is a flowchart of an operation of updating the authentication status held by authentication status holder 12 (user authentication method) according to the present embodiment. The flowchart illustrated in FIG. 5 is executed after step S40 illustrated in FIG. 4. User detector 11 executes the processes illustrated in FIG. 5 on a regular or continuous basis.

As illustrated in FIG. 5, user detector 11 determines whether the user has exited vehicle 1 based on the user detection information (S110). User detector 11 determines whether the user authenticated in step S40 illustrated in FIG. 4 is riding in vehicle 1, based on the user detection information. When user detector 11 determines that the user is not riding in vehicle 1, user detector 11 determines that the user has exited vehicle 1. The point in time at which the user is determined to have exited vehicle 1 is a point in time after the first point in time, and is an example of a third point in time.

User detector 11 determines that the user has not exited vehicle 1 when at least one of the following conditions is met throughout the period of time from the first point in time to the third point in time. The conditions include that (i) a load applied to the seat of vehicle 1 is continuously being detected, (ii) use of the seat belt in vehicle 1 is continuously being detected, (iii) the user is continuously being captured by an imaging device in vehicle 1, (iv) the speed of vehicle 1 is continuously greater than zero, and (v) windows or doors of vehicle 1 are continuously closed.

Next, when user detector 11 determines that the user has exited vehicle 1 (Yes in S110), user detector 11 updates the authentication status of the user held by authentication status holder 12 to "unauthenticated" (S120). In this way, when the user is detected to have exited vehicle 1, the authentication status of the user held by authentication status holder 12 is updated from "authenticated" to "unauthenticated".

Determining that the user has exited vehicle 1 corresponds to determining that a specific condition is not met. In this way, when the specific condition is not met, the authentication status is initialized. The specific condition can be said to be a condition for initializing the authentication status.

When processes in step S20 or subsequent steps illustrated in FIG. 4 are executed after step S120, Yes is determined in step S30, so that the authentication process is performed. In this way, in a situation in which it cannot be determined that the user before exiting vehicle 1 and the user after exiting vehicle 1 are the same person because the user has exited vehicle 1 (a situation in which the identity of the user is lost), authentication device 10 performs an authentication process, for example, for a user who gets in vehicle 1 after the user who was authenticated in step S40 illustrated in FIG. 4 has exited vehicle 1. This prevents the security for vehicle 1 from being reduced.

When user detector 11 does not determine that the user has exited vehicle 1 (No in S110), processing returns to step S110 and is continued, for example, until vehicle 1 arrives at the destination. When user detector 11 determines that the user has not exited vehicle 1, user detector 11 does not update the authentication status, but maintains the authentication status immediately before the determination in step S110 is made. It can be said that user detector 11 prohibits updating the authentication status when user detector 11 determines that the user has not exited vehicle 1. Not determining that the user has exited vehicle 1 (i.e., determining that the user has not exited vehicle 1) corresponds to determining that a specific condition is met.

### (Variation of Embodiment)

A user authentication system according to a variation will be described below with reference to FIG. 6. In the following description, the differences from the embodiment will be mainly described, and explanations of the contents that are the same or similar to the embodiment will be omitted or simplified. The configuration of the user authentication system according to the variation may be the same as the configuration of the user authentication system according to the embodiment. In the following description, the referential numerals of the user authentication system according to the embodiment will be used.

FIG. 6 is a flowchart of an authentication operation (user authentication method) performed by authentication device 10 according to the variation. In the embodiment, the example has been described in which the user authentication is triggered by the user performing a device operation on device operation input device 20. However, the trigger is not limited to such an example. FIG. 6 illustrates an operation performed by authentication device 10 in vehicle 1 in which an authentication operation can be performed along with the start of the engine.

As illustrated in FIG. 6, authenticator 14 determines whether an authentication operation has been performed along with the start of the engine (S210). When the authentication operation has been performed by the user along with the start of the engine, authenticator 14 determines that the authentication operation has been performed along with the start of the engine. The authentication in step S210 is performed, for example, but not limited to, by biometric authentication.

Next, when authenticator 14 determines that the authentication operation has been performed along with the start of the engine (Yes in S210), authenticator 14 updates the user authentication status held by authentication status holder 12 to "authenticated" (S220). In this case, S20 and the subsequent steps are executed assuming that the authentication status is "authenticated". In this case, the user authentication has been completed before the user performs a first device operation after getting in vehicle 1.

When authenticator 14 determines that the authentication operation has not been performed along with the start of the engine (No in S210), processing proceeds to step S20. In this case, S20 and subsequent steps are executed assuming that the authentication status is "unauthenticated".

When Yes is determined in step S210, the first point in time is the point in time when the user starts the engine of vehicle 1.

### (Other Embodiments)

The user authentication system and the like according to one or more aspects has been described above based on the embodiment and the like. However, the present disclosure is not limited to the embodiment and the like. Embodiments obtained by performing, on the embodiment described above, various variations conceived by a person skilled in the art and embodiments established by combining structural elements in different embodiments are also included in the scope of the present disclosure as long as they do not depart from the spirit of the present disclosure.

For example, in the above embodiment, the authentication of the user is triggered by the user performing an operation on a device. However, the present disclosure is not limited to such an example, and, for example, the user may be authenticated every predetermined period of time. In this case, the user is authenticated regardless of whether the user operates the device. In addition, at each predetermined period of time, a determination is made as to whether authentication of the user is required.

It is possible to determine whether an authentication device uses the technique according to the present disclosure by actually performing multiple authentication operations on the authentication device and testing the conditions in which reauthentication operations are required.

In the embodiment and the like described above, each structural element may be configured in the form of a dedicated hardware product or realized by executing a software program suitable for each structural element. Each of the structural elements may be realized by means of a program executing unit, such as a central processing unit (CPU) and a processor, reading and executing the software program recorded on a recording medium, such as a hard disk or a semiconductor memory.

The order in which the steps in the flowcharts are executed has been described as examples for specifically describing the present disclosure. The steps may be executed in any other order. In addition, some of the steps may be executed at the same time as (in parallel with) another step, or do not have to be executed.

Moreover, the separation of the function blocks in the block diagrams is merely an example, and plural function blocks may be implemented as a single function block, a single function block may be separated into plural function blocks, or part of functions of a function block may be transferred to another function block. Moreover, the functions of function blocks having similar functions may be processed in parallel or in a time-division manner by a single hardware or software.

The authentication device according to the embodiment and the like may be realized as a single device, or by a plurality of devices. When the authentication device is realized by a plurality of devices, the structural elements included in the authentication device may be distributed to the devices in any manner. When the authentication device is realized by a plurality of devices, the communication method performed between the plurality of devices is not particularly limited, and may be a wireless communication or a wired communication. A combination of the wireless and wired communications may be used between the devices.

Although the embodiment and the like has been described as cyber security measures in vehicles (e.g., automobiles), the scope of application of the present disclosure is not limited to such an example. For example, the present disclosure may be applied not only to automobiles, but also to other mobile objects such as construction machinery, agricultural machinery, vessels, trains, and airplanes.

Each structural element described in the above embodiment and the like may be implemented as a software, or typically as a large scale integration (LSI) which is an integrated circuit (IC). They may be individually configured as single chips or may be configured so that part or all are included in a single chip. The name used here is LSI, but it may also be called IC system, system LSI, super LSI or ultra LSI depending on the degree of integration. The method of circuit integration is not limited to LSIs, and implementation through a dedicated circuit (a general-purpose circuit that executes a dedicated program) or a general-purpose processor is also possible. A programmable field programmable gate array (FPGA) that can be programmed after the LSI is manufactured or a reconfigurable processor in which the connection and settings of circuit cells inside the LSI can be reconfigured may be used. Furthermore, if an integrated circuit technology that replaces an LSI appears due to advances in semiconductor technology or another technology derived from it, it is natural that the technology is used to create an integrated circuit of the structural elements.

The system LSI is an ultra-multifunctional LSI manufactured by integrating a plurality of processing units on a single chip, and specifically, is a computer system including a microprocessor, a read only memory (ROM), a random access memory (RAM) and the like. A computer program is stored in the RAM. The system LSI achieves its function by the microprocessor operating according to the computer program.

Moreover, an aspect of the present disclosure may be a computer program for causing a computer to execute the characteristic steps included in the user authentication method illustrated in any of FIG. 4 to FIG. 6.

For example, the program may be a program to be executed by a computer. Moreover, an aspect of the present disclosure may also be a non-transitory computer-readable recording medium on which this sort of computer program is recorded. For example, such a program may be recorded on a recording medium for distribution. For example, the distributed program is installed in a device that includes another processor, and the program is executed by the processor, so that the device is capable of performing various processes.

### [Industrial Applicability]

The present disclosure is useful for an authentication device and the like that authenticates the user in a vehicle.

### [Reference Signs List]

- 1: vehicle
- 10: authentication device
- 11: user detector
- 12: authentication status holder
- 13: authentication necessity determiner
- 14: authenticator
- 20: device operation input device
- 30: requested function activation device

## Claims

1. A user authentication method for authenticating a user who is riding in a vehicle, the user authentication method comprising:
authenticating the user at a first point in time;
determining whether a specific condition for the user is met when the user performs, at a second point in time, an operation on a device provided to the vehicle, the second point in time being after the user is authenticated; and
skipping authentication of the user for the operation on the device, when the specific condition is determined to be met.

2. The user authentication method according to claim 1, further comprising:
updating an authentication status of the user to information indicating an authenticated status when the user is authenticated at the first point in time,
wherein, in the determining, whether the specific condition is met is determined based on the authentication status at the second point in time.

3. The user authentication method according to claim 2,
wherein, in the determining, the specific condition is determined to be met when the authentication status indicates the authenticated status, and the specific condition is determined not to be met when the authentication status indicates an unauthenticated status.

4. The user authentication method according to claim 2 or claim 3, further comprising:
updating the authentication status to information indicating an unauthenticated status, when the user is detected, at a third point in time, to have exited the vehicle, the third point in time being after the first point in time.

5. The user authentication method according to claim 4, further comprising:
determining that the user has not exited the vehicle when at least one of conditions is met throughout a period of time from the first point in time to the third point in time, the conditions including (i) that a load applied to a seat of the vehicle is continuously being detected, (ii) that use of a seat belt of the vehicle is continuously being detected, (iii) that the user is being continuously captured by an imaging device in the vehicle, (iv) that a vehicle speed of the vehicle is continuously greater than zero, and (v) that a window or a door of the vehicle is continuously closed.

6. The user authentication method according to any one of claims 1 to 3,
wherein the specific condition includes a condition that the user at the first point in time and the user at the second point in time are a same person.

7. The user authentication method according to any one of claims 1 to 3,
wherein the first point in time is a point in time at which the user performs the operation on the device.

8. The user authentication method according to any one of claims 1 to 3,
wherein the first point in time is a point in time at which the user starts an engine of the vehicle.

9. The user authentication method according to any one of claims 1 to 3, further comprising:
requesting authentication of the user for the operation on the device, when the specific condition is determined not to be met.

10. A user authentication system that authenticates a user who is riding in a vehicle, the user authentication system comprising:
an authenticator that authenticates the user at a first point in time; and
an authentication necessity determiner that determines whether a specific condition for the user is met when the user performs, at a second point in time, an operation on a device provided to the vehicle, the second point in time being after the user is authenticated,
wherein the authentication necessity determiner causes the authenticator to skip authentication of the user for the operation on the device, when determining that the specific condition is met.
